# EUROPÄISCHE PATENTSCHRIFT

(11) **EP 4 547 066 B1**
(45) Veröffentlichungstag und Bekanntmachung des Hinweises auf die Patenterteilung: **19.08.2026**
(21) Anmeldenummer: 23744056.5
(22) Anmeldetag: 30.06.2023
(51) Int. Cl.: A47J 31/44, A47J 31/42

(54) **KAFFEEMASCHINE UND VERFAHREN ZUM ZUBEREITEN EINES KAFFEEGETRÄNKS**
COFFEE MACHINE AND METHOD FOR PREPARING A COFFEE DRINK
MACHINE À CAFÉ ET PROCÉDÉ DE PRÉPARATION D'UNE BOISSON AU CAFÉ

(30) Priorität: 01.07.2022 CH 7972022
(43) Veröffentlichungstag der Anmeldung: 07.05.2025
(73) Patentinhaber: Coffee Vision AG, 6004 Luzern (CH)
(72) Erfinder: FEIERABEND, Georg Josef, 4663 Aarburg (CH)
(74) Vertreter: Frei Patent Attorneys
(86) Internationale Anmeldenummer: PCT/EP2023/068035
(87) Internationale Veröffentlichungsnummer: WO 2024/003366

(56) Entgegenhaltungen:
- CN-A- 106 580 103
- DE-U1- 202020 100 937
- DE-U1- 212013 000 025
- US-A1- 2018 368 607
- US-A1- 2020 237 137
- US-A1- 2021 307 557

## Beschreibung

Die Erfindung liegt auf dem Gebiet der Kaffeemaschinen und betrifft eine Kaffeemaschine mit einer Maschineneinheit und mit einer von der Maschineneinheit abnehmbaren Siebträgereinrichtung zum Herstellen, insbesondere Brühen eines Kaffeegetränks gemäss dem Oberbegriff des unabhängigen Anspruchs 1. Ferner betrifft die Erfindung auch ein Verfahren zum Herstellen, insbesondere Brühen eines Kaffeegetränks.

Kaffeemaschinen mit Siebträgereinrichtungen, kurz: Siebträger genannt, werden auch als Siebträgermaschinen bezeichnet. Siebträgermaschinen sind unter den Kaffeemaschinen weit verbreitet. Es gibt Siebträgermaschinen sowohl für Privathaushalte als auch für die Gastronomie. Siebträgermaschinen arbeiten halbautomatisch indem gewisse Bedienschritte manuell erfolgen. So wird der Siebträger, welcher das Kaffeepulver aufnimmt, gemäss gängigem Stand der Technik sowohl zum Befüllen mit Kaffeepulver vor dem Brühvorgang als auch zum Entfernen des Kaffeetresters nach dem Brühvorgang manuell von der Kaffeemaschine abgenommen.

Unter Kaffeepulver ist in vorliegender Beschreibung insbesondere gemahlener Kaffee, also Kaffeemehl zu verstehen. Unter Kaffeetrester ist in vorliegender Beschreibung insbesondere der Pressrückstand nach dem Brühvorgang gemeint, welcher auch als Kaffeesatz bezeichnet wird.

Das Kaffeepulver wird bei Siebträgermaschinen ausserhalb der Kaffeemaschine in den Siebträger eingefüllt. Gewisse Siebträgermaschinen weisen ein angegliedertes Mahlwerk auf. Hier wird der von der Kaffeemaschine separierte Siebträger zum Befüllen mit Kaffeepulver unter die Abgabeöffnung des Mahlwerks gehalten und anschliessend manuell an der Kaffeemaschine in der Brühposition befestigt.

Dies im Gegensatz zu vollautomatisch arbeitenden Kaffeemaschinen, bei welchen das Kaffeepulver direkt von einem integrierten Mahlwerk in die Brühkammer gelangt und der Kaffeetrester nach Ende des Brühvorganges automatisch in einen integrierten Auffangbehälter ausgestossen wird.

Der Siebträger wird in der Regel über einen Schnellverschluss an der Kaffeemaschine befestigt. Bekannte Siebträger weisen ein Siebträgergehäuse mit mehreren radial nach außen abstehenden Vorsprüngen auf, die mit einer maschinenseitig am Anschlussabschnitt vorgesehenen Führungskontur zusammenwirken und dabei einen Bajonettverschluss zwischen Siebträger und Anschlussabschnitt ausbilden. Zum Anbringen des Siebträgers an der Kaffeemaschine wird der Siebträger von unten an den Anschlussabschnitt angesetzt, derart dass die Vorsprünge am Siebträger in die Führungskontur eingreifen. Nachfolgend wird der Siebträger unter Ausübung einer Drehbewegung mit dem Handgriff an der Kaffeemaschine befestigt.

Diese Art von Verschlussmechanik weist den Nachteil auf, dass das Anbringen des Siebträgers recht umständlich und schwerfällig ist. So muss der Siebträger in der richtigen Winkelstellung am Anschlussabschnitt von unten angesetzt werden, damit die Vorsprünge in die Führungskontur eingreifen. Überdies erfordert die Befestigung des Siebträgers mittels Drehbewegung einen erhöhten Kraftaufwand. Weist die Führungskontur Verschmutzungen, z. B. durch Kaffeerückstände auf, so lässt sich der Siebträger unter Umständen nicht in der gewünschten Drehposition befestigen.

Die EP 3 954 256 Al beschreibt beispielsweise eine Siebträgermaschine mit einem Siebträger wie sie aus dem Stand der Technik bekannt sind.

Das dem Brühvorgang vorausgehende Andrücken des Kaffeepulvers im Kaffeeaufnahmeraum des Siebträgers, welches z. B. für die Zubereitung eines Espressos mit Crema besonders wichtig ist, erfolgt bei gewissen Siebträgermaschinen indem der Siebträger beim Befestigen an der Kaffeemaschine nach oben gegen einen feststehenden Stempel gedrückt wird. Bei solchen Siebträgermaschinen werden in der Regel unterschiedlich Siebeinsätze verwenden, mittels welchen die für den Brühvorgang verwendete Menge an Kaffeepulver variiert werden kann.

Es sind allerdings auch Siebträgermaschinen bekannt, die zum Andrücken des Kaffeepulvers, dem so genannten «Tampern» über einen beweglichen Brühkolben verfügen, welcher über einen Handhebel nach unten zum Siebträger gedrückt werden kann.

Die Publikationsschrift DE 20 2020 100937 U1 offenbart eine Kaffeemaschine mit Siebträger und einem beweglich gelagerten Brühkolben. Der Siebträger enthält ein Behältnis zur Aufnahme von Kaffeepulver. Die Kaffeemaschine umfasst ferner Linearführungen, in welchen seitliche Vorsprünge am Siebträger gleiten. Der Siebträger kann über die Linearführungen in eine Endposition geschoben werden, in welcher sich der Brühkolben über dem Behältnis des Siebträgers befindet.

Es ist nun eine Aufgabe der vorliegenden Erfindung eine Kaffeemaschine mit Siebträgereinrichtung vorzuschlagen, welche ein einfaches und schnelles Anbringen der Siebträgereinrichtung an der Kaffeemaschine erlaubt.

Ferner ist es eine Aufgabe der vorliegenden Erfindung, eine Kaffeemaschine vorzuschlagen, welche ein definiertes Andrücken des Kaffeepulvers auch bei unterschiedlicher Befüllung des Siebträgers mit Kaffeepulver und ohne die Verwendung von Siebeinsätzen unterschiedlicher Grösse ermöglicht.

Eine weitere Aufgabe besteht darin, eine Kaffeemaschine vorzuschlagen, welche ein einfaches, schnelles und insbesondere sicheres Befüllen der Siebträgereinrichtung mit Kaffeepulver gewährleistet.

Eine weitere Aufgabe besteht darin, eine Kaffeemaschine mit einem Mahlwerk vorzuschlagen, welches ein rückstandfreies Wechseln der Kaffeesorte erlaubt.

Wenigstens eine Aufgabe wird durch die Merkmale der unabhängigen Ansprüche gelöst. Die abhängigen Ansprüche, die Beschreibung und die Figuren beinhalten besondere Ausführungsformen und Weiterbildungen der Erfindung.

Die Kaffeemaschine enthält eine Maschineneinheit und eine von der Maschineneinheit abnehmbare Siebträgereinrichtung mit einem Kaffeeaufnahmeraum und einem Brühsieb. Die Maschineneinheit enthält einen beweglich gelagerten Brühkolben, eine Brühwasseraufbereitungseinrichtung zum Erzeugen und Abgeben von heissem Wasser unter Druck in den Kaffeeaufnahmeraum der Siebträgereinrichtung und eine Halte- und Führungseinrichtung zum Aufnehmen und Haltern der Siebträgereinrichtung an der Maschineneinheit.

«Abnehmbar» bedeutet insbesondere, dass die Siebträgereinrichtung ohne bleibende Verbindung zur Maschineneinheit vollständig von der Maschineneinheit trennbar ist. Die Siebträgereinrichtung ist hierbei insbesondere über einen Handgriff von der Maschineneinheit abnehmbar bzw. an diese anbringbar. Das Anbringen und Abnehmen der Siebträgereinrichtung erfolgt insbesondere werkzeugfrei.

Die Siebträgereinrichtung ist insbesondere zum Entfernen des Kaffeetresters nach einem Brühvorgang von der Maschineneinheit abnehmbar. Ergänzend kann die Siebträgereinheit auch zum Befüllen der Siebträgereinrichtung mit Kaffeepulver von der Maschineneinheit abnehmbar sein.

Die Halte- und Führungseinrichtung umfasst eine Linearführungsvorrichtung zum linearen, d.h. geradlinigen, Einschieben der Siebträgereinrichtung in die Maschineneinheit.

Die Siebträgereinrichtung ist durch eine entsprechende, lineare, d.h. geradlinige Gegenbewegung über die Linearführungsvorrichtung insbesondere auch wieder aus der Maschineneinheit herausziehbar.

Die Linearführungsvorrichtung enthält insbesondere zwei voneinander beabstandete, parallel verlaufende Führungskonturen, wie Führungsschienen. Die Führungskonturen können einen Führungsschlitz oder einen Führungskanal ausbilden.

Die Linearführungsvorrichtung ist insbesondere unterhalb einer Brüheinheit und gegebenenfalls unterhalb einer Einrichtung zum Abgeben von Kaffeepulver, insbesondere zum Erzeugen und Abgeben von Kaffeepulver, angeordnet.

Die Linearführungsvorrichtung kann an einer Trägerplatte angeordnet sein oder Teil einer Trägerplatte sein. Auf der Trägerplatte können die Brüheinheit und gegebenenfalls die Einrichtung zum Abgeben von Kaffeepulver, insbesondere zum Erzeugen und Abgeben von Kaffeepulver, angeordnet bzw. befestigt sein.

Die Siebträgereinrichtung enthält insbesondere ein Siebträgergehäuse, in welchem der Kaffeeaufnahmeraum angeordnet ist. Seitlich am Siebträgergehäuse sind Führungskörper, insbesondere mindestens zwei einander gegenüberliegende Führungskörper angeordnet, welche im Zusammenwirken mit der Linearführungsvorrichtung eine Linearführung ausbilden. Die Führungskörper sind insbesondere als seitliche Führungsleisten ausgebildet, welche insbesondere parallel zueinander verlaufen.

Die über die Linearführungsvorrichtung ausgeführte lineare Bewegung ist insbesondere horizontal.

Die Siebträgereinrichtung ist insbesondere entlang bzw. parallel zu einer Einschubebene über die Linearführungsvorrichtung in die Maschineneinheit einschiebbar. Die Einschubebene ist insbesondere horizontal ausgerichtet.

Die horizontale Bewegung bzw. Einschubebene bedingen allerdings, dass die Kaffeemaschine bzw. Maschineneinheit auf einer horizontalen Auflage abgestützt ist.

Die Linearführung ist insbesondere eine Gleitführung, bei welcher die Führungskörper in der Linearführungsvorrichtung bzw. in den Führungskonturen gleiten.

Die in der Linearführungsvorrichtung gehalterte bzw. gehaltene Siebträgereinrichtung ist in der Maschineneinheit in eine Brühposition zum Brühen eines Kaffees bewegbar. Die Siebträgereinrichtung ist über die Linearführungsvorrichtung insbesondere in einer linearen Bewegung in eine Brühposition schiebbar bzw. bewegbar.

Die Brühposition wird in der Maschineneinheit insbesondere unterhalb einer Brüheinheit ausgebildet. Sie entspricht insbesondere jener Position, welche die Siebträgereinrichtung während des Brühvorganges einnimmt. bzw. aufweist.

Erfindungsgemäss enthält die Maschineneinheit eine Einrichtung zum Abgeben und insbesondere zum Erzeugen und Abgeben von Kaffeepulver in den Kaffeeaufnahmeraum der Siebträgereinrichtung.

Die in der Linearführungsvorrichtung gehalterte bzw. gehaltene Siebträgereinrichtung ist in der Maschineneinheit zum Abgeben von Kaffeepulver in den Kaffeeaufnahmeraum der Siebträgereinrichtung in eine Befüllposition bewegbar.

Die Siebträgereinrichtung ist über die Linearführungsvorrichtung insbesondere in einer linearen Bewegung in eine Befüllposition schiebbar bzw. bewegbar, in welcher der Kaffeeaufnahmeraum der Siebträgereinrichtung mit Kaffeepulver befüllbar ist.

Die Befüllposition ist von der Brühposition verschieden. Die Befüllposition und die Brühposition liegen insbesondere in einer gemeinsamen horizontalen Ebene.

Die Befüllposition wird in der Maschineneinheit insbesondere unterhalb eines Mahlwerks ausgebildet. Die Befüllposition kann in der Maschineneinheit allerdings auch unterhalb einer Kaffeepulverabgabeeinrichtung ausgebildet sein. Die Kaffeepulverabgabeeinrichtung kann einen Behälter zur Speicherung von Kaffeepulver umfassen, welcher manuell mit Kaffeepulver befüllt werden muss.

Die in der Linearführungsvorrichtung gehalterte bzw. gehaltene Siebträgereinrichtung ist in der Maschineneinheit zwischen der Befüllposition und der Brühposition bewegbar.

Die über die Linearführungsvorrichtung linear in die Maschineneinheit eingeschobene Siebträgereinrichtung ist in der Maschineneinheit zwischen der Befüllposition und der Brühposition bewegbar.

Die Siebträgereinrichtung ist in der Maschineneinheit insbesondere in einer Ebene, ganz besonders in einer horizontalen Ebene zwischen der Befüllposition und der Brühposition bewegbar.

Die Bewegung der Siebträgereinrichtung zwischen der Befüllposition und der Brühposition kann eine lineare Bewegung sein. Dies ist insbesondere dann der Fall, wenn die Siebträgereinrichtung in der Linearführungsvorrichtung zwischen der Befüllposition und der Brühposition bewegt wird.

Die Bewegung der Siebträgereinrichtung zwischen der Befüllposition und der Brühposition kann eine Schwenkbewegung sein, wie sie weiter unten noch näher beschrieben wird.

Die Siebträgereinrichtung wird in der Maschineneinheit bei der Bewegung zwischen der Befüllposition und der Brühposition in der Linearführungsvorrichtung gehaltert bzw. gehalten, über welche die Siebträgereinrichtung bereits in die Maschineneinheit eingeschoben wurde.

Gemäss einer ersten Ausführungsvariante sind die Brühposition und die Befüllposition entlang der Einschubachse der Siebträgereinrichtung hintereinander angeordnet.

Die Befüllposition ist in Einschubrichtung insbesondere nach der Brühposition angeordnet ist. Zum Einleiten eines Brühvorganges wird die Siebträgereinrichtung in einer linearen Bewegung bis zur Einnahme der Befüllposition in die Maschineneinheit eingeschoben und nach Befüllen der Siebträgereinrichtung mit Kaffeepulver in einer linearen Gegenbewegung in die Brühposition zurückgezogen. Nach Abschluss des Brühvorganges wird die Siebträgereinrichtung in Fortsetzung der linearen Gegenbewegung ganz aus der Maschineneinheit herausgezogen.

Alternativ kann die Befüllposition in Einschubrichtung auch vor der Brühposition angeordnet sein. Zum Einleiten eines Brühvorganges wird die Siebträgereinrichtung in einer linearen Bewegung bis zur Einnahme der Befüllposition in die Maschineneinheit eingeschoben. Nach Befüllen der Siebträgereinrichtung mit Kaffeepulver wird die Siebträgereinrichtung in Fortsetzung der linearen Einschubbewegung in die Brühposition weitergeschoben. Nach Abschluss des Brühvorganges wird die Siebträgereinrichtung in einer linearen Gegenbewegung an der Befüllposition vorbei ganz aus der Maschineneinheit herausgezogen.

Die Linearführungsvorrichtung ist gemäss dieser Ausführungsvariante insbesondere unbeweglich bzw. stationär an der Maschineneinheit angebracht.

Gemäss einer zweiten Ausführungsvariante ist die Linearführungsvorrichtung über eine senkrecht zur Einschubebene angeordneten Schwenkachse schwenkbar an der Maschineneinheit gelagert. Die über die Linearführungsvorrichtung in die Maschineneinheit eingeschobene Siebträgereinrichtung ist zusammen mit der Linearführungsvorrichtung zwischen einer Befüllposition und der Brühposition schwenkbar gelagert.

Die Siebträgereinrichtung ist in diesem Fall relativ zur Linearführungsvorrichtung in eine Arbeitsposition einschiebbar, in welcher die Siebträgereinrichtung relativ zur Einrichtung zum Abgeben bzw. zum Erzeugen und Abgeben von Kaffeepulver und zur Brüheinheit zwischen der Befüllposition und der Brühposition verschwenkbar ist.

Gemäss einer Weiterbildung der Erfindung können Rastmittel vorgesehen, welche die Einnahme einer Raststellung der Siebträgereinrichtung in einer oder mehreren der folgenden Positionen ermöglichen:
- Befüllposition (erste Ausführungsvariante);
- Brühposition (erste Ausführungsvariante);
- Arbeitsposition (zweite Ausführungsvariante).

So können Rastmittel vorgesehen sein, welche so ausgelegt sind, dass die Positionierung der Siebträgereinrichtung in der Brühposition durch Einnahme einer Raststellung erfolgt.

Die Rastmittel sind zur Positionierung der Siebträgereinrichtung in der entsprechenden Position durch Einnahme einer Rastposition ausgelegt. Die Rastmittel bewirken insbesondere eine exakte Positionierung in der entsprechenden Position. Die Rastmittel bewirken insbesondere eine Selbstzentrierung der Siebträgereinrichtung in der entsprechenden Position.

Die Rastmittel sind insbesondere so ausgelegt, dass sich die Siebträgereinrichtung, gegebenenfalls mittels erhöhtem Kraftaufwand, über die Rastposition hinweg weiterschieben bzw. zurückziehen lässt.

Die Rastmittel können zum Beispiel federbelastete Druckknöpfe oder Kugeln sein, welche während der Linearbewegung der Siebträgereinrichtung in der entsprechenden Position in eine Vertiefung in der Linearführungsvorrichtung eingreifen. Die federbelasteten Knöpfe oder Kugeln können z. B. an der Siebträgereinrichtung, insbesondere an den Führungskörpern, angeordnet sein. Die Vertiefungen können z. B. in den Führungsschienen bzw. Führungsschlitzen oder Führungskanälen angeordnet sein.

Die Vertiefungen weisen insbesondere in und entgegen der Einschubrichtung Rampen auf, welche das Herausbewegen der Siebträgereinrichtung aus der Raststellung, in beide Richtungen, erleichtern, bzw. den Kraftaufwand reduzieren. Dies ist insbesondere relevant, wenn die Siebträgereinrichtung über die Rastposition hinaus weiterbewegt werden soll.

Gemäss einer Weiterbildung der Erfindung können in der Maschineneinheit, insbesondere an der Halte- und Führungseinrichtung bzw. Linearführungsvorrichtung, Anschlagmittel als Einschubbegrenzung vorgesehen sein, mittels welchen sich die Siebträgereinrichtung in einer der folgenden Positionen positionieren lässt:
- Befüllposition (erste Ausführungsvariante);
- Brühposition (erste Ausführungsvariante);
- Arbeitsposition (zweite Ausführungsvariante).

So können Anschlagmittel vorgesehen sein, an welchen sich die Siebträgereinrichtung in der Befüllposition positionieren lässt.

Die Anschlagmittel bewirken durch Anschlagen der Siebträgereinrichtung an den Anschlagmitteln insbesondere eine exakte Positionierung in der entsprechenden Position.

Die Siebträgereinrichtung enthält insbesondere einen Handgriff zum manuellen Einschieben der Siebträgereinrichtung in die Maschineneinheit und zum manuellen Herausziehen aus der Maschineneinheit.

Der Kaffeeaufnahmeraum der Siebträgereinrichtung kann insbesondere durch einen in das Siebträgergehäuse integrierten Siebeinsatz mit Brühsieb ausgebildet werden. So kann der Kaffeeaufnahmeraum der Siebträgereinrichtung durch einen fest im Siebträgergehäuse verbauten Siebeinsatz mit Brühsieb ausgebildet sein. Der Siebeinsatz kann allerdings auch herausnehmbar sein.

Da gemäss vorliegender Erfindung der beweglich gelagerte Brühkolben zum Andrücken (Tampern) des Kaffeepulvers und zum Schliessen der Brühkammer in den Kaffeeaufnahmeraum der Siebträgereinrichtung vorgetrieben wird, sind keine unterschiedlich grossen Siebeinsätze für unterschiedliche Mengen an Kaffeepulver notwendig.

Der Brühkolben ist insbesondere Teil einer in der Maschineneinheit ausgebildeten Brüheinheit und weist einen Kolbenstempel auf. Der Kolbenstempel ist brühseitig angeordnet. Der Kolbenstempel ist insbesondere mit einem Kolbenschaft verbunden, welcher in einem Kolbenschaftgehäuse geführt ist. Brühkolben und Kolbenschaftgehäuse sind insbesondere Teil der Brüheinheit in der Maschineneinheit.

Die Brüheinheit bildet zusammen mit der Siebträgereinrichtung insbesondere eine Brühgruppe aus.

Der Brühkolben ist insbesondere angetrieben. Der Antrieb kann manuell, z. B. über einen Hebelmechanismus, oder über eine Steuerungseinrichtung mittels eines Kolbenantriebs erfolgen.

Der Kolbenantrieb kann einen Elektromotor umfassen. So kann der Brühkolben über eine Antriebsspindel vom Elektromotor angetrieben werden.

Der Kolbenantrieb kann auch einen hydraulischen Antrieb umfassen, mittels welchem in einer Druckkammer über eine Hydraulikflüssigkeit, wie Wasser, ein hydraulischer Druck aufgebaut wird, welcher den Brühkolben in die Brühposition schiebt. Der hydraulische Druck kann z. B. zwischen 2 und 3 bar betragen.

Der hydraulische Antrieb kann die Wasserpumpe einer Brühwasseraufbereitungseinrichtung der Maschineneinheit sein. Die Hydraulikflüssigkeit ist entsprechend Wasser aus dem Wassertank der Brühwasseraufbereitungseinrichtung. Der Antrieb erfolgt hier über einen durch die Wasserpumpe erzeugten hydraulischen Druck, welcher auf den Brühkolben wirkt.

Der Kaffeeaufnahmeraum bzw. die den Kaffeeaufnahmeraum ausbildende Kaffeeaufnahme ist insbesondere ortsfest bzw. unbeweglich in der Maschineneinheit angeordnet, insbesondere während des Brühvorgangs. Entsprechendes gilt folglich für die Siebträgereinrichtung.

Der Kaffeeaufnahmeraum der Siebträgereinrichtung bildet im Bereich einer Aufnahmeöffnung gegen aussen insbesondere eine trichterartig Erweiterung aus.

Die Aufnahmeöffnung entspricht jener Öffnung, welche gegen die Brüheinheit der Maschineneinheit gerichtet ist, und durch welche der Brühkolben mit seinem Kolbenstempel unter Ausbildung der Brühkammer in den Kaffeeaufnahmeraum eingreift. Durch die Aufnahmeöffnung erfolgt in der Regel auch das Befüllen des Kaffeeaufnahmeraums mit Kaffeepulver.

Die trichterartige Erweiterung bewirkt eine Selbstzentrierung der Siebträgereinrichtung in der Brühposition durch den nach unten bewegten und in den Kaffeeaufnahmeraum eingreifenden Kolbenstempel des Brühkolbens.

Die Mittel zum Erzeugen und Abgeben von Kaffeepulver umfassen insbesondere ein Mahlwerk, wie Kegelmahlwerk.

Das Kegelmahlwerk zeichnet sich durch einen innen liegenden, feststehenden Mahlkegel und einen aussen liegenden, angetriebenen Mahlring aus, welcher den Mahlkegel umgibt. Der Mahlring wird insbesondere durch einen Antrieb, wie Elektromotor angetrieben. Zum Antreiben des Mahlrings bilden insbesondere ein Antriebsmittel des Antriebs, wie Antriebsspindel, und die Mantelfläche des Mahlrings eine Antriebspaarung aus. Die Mantelfläche des Mahlrings weist insbesondere ein Rauhigkeitsmuster, wie Riffelung oder Zahnung auf.

Das Kegelmahlwerk ist insbesondere so ausgelegt und in der Maschineneinheit angeordnet, dass das gemahlene Kaffeepulver mittels Schwerkraft führungslos aus dem Kegelmahlwerk nach unten in den unterhalb angeordneten Kaffeeaufnahmeraum der in der Maschineneinheit in die Befüllposition eingeschobenen Siebträgereinrichtung fällt.

Bei herkömmlichen Kegelmahlwerken, bei welchen der Mahlkegel angetrieben ist, wird das Kaffeepulver über eine geneigte Führungsfläche schräg nach unten abgeleitet. Die Führungsfläche ist unter anderem vorgesehen, weil aus Platzgründen ein direktes, insbesondere führungsloses Wegführen des Kaffeepulvers vertikal nach unten nicht möglich ist. Hierfür verantwortlich ist unter anderem der Antrieb des Mahlkegels, welcher unterhalb des Mahlkegels in der Verlängerung der Kegelachse angeordnet ist.

Auf der Führungsfläche bleiben nach einem Mahlvorgang jeweils geringe Mengen an Kaffeepulver hängen, so dass beim ersten Mahlvorgang nach einem Wechsel der Kaffeebohnen immer noch Kaffeepulverrückstände des vorangehenden Mahlvorganges in den Siebträger gelangen. Dieser Nachteil wird durch das vorliegende Kegelmahlwerk behoben.

Der Mahlring und der Mahlkegel sind hierzu insbesondere in einem Gehäuse angeordnet. Das Gehäuse kann ein- oder mehrteilig sein. Der Mahlring ist im Gehäuse insbesondere über ein Lager, z. B. Kugellager, drehbar gelagert.

Der Mahlkegel verjüngt sich ausgehend von der Kegelbasis nach oben. Der feststehende Mahlkegel ist insbesondere über Verbindungsstege mit dem Gehäuse verbunden. Die Kegelachse des Mahlkegels ist insbesondere vertikal ausgerichtet.

Der Mahlkegel ist ganz besonders an seinen beiden Kegelenden insbesondere jeweils über Verbindungsstege mit dem Gehäuse verbunden.

Die Verbindungsstege verlaufen insbesondere quer zur (geometrischen) Kegelachse des Mahlkegels. Die Verbindungsstege können zum Beispiel ausgehend von der Kegelachse radial bzw. sternförmig nach aussen zum Gehäuse hin verlaufen.

Am oberen Ende des Mahlkegels werden zwischen den Verbindungsstegen insbesondere eine oder mehrere Durchlassöffnungen zum Durchlassen von Kaffeebohnen nach unten in das Mahlwerk ausgebildet.

Am unteren Ende des Mahlkegels, d.h. an der Kegelbasis, werden zwischen den Verbindungsstegen insbesondere eine oder mehrere Durchlassöffnungen zum Durchlassen von Kaffeepulver aus dem Mahlwerk nach unten ausgebildet.

Gemäss einer Ausführungsvariante enthält das Kegelmahlwerk ein den Mahlkegel und den Mahlring aufnehmendes Gehäuse, wobei der feststehende Mahlkegel über Verbindungsstege mit dem Gehäuse verbunden ist.

Die Erfindung betrifft ferner auch ein Verfahren zum Brühen eines Kaffeegetränks mit einer Kaffeemaschine wie oben beschrieben. Unter Kaffeegetränk sollen definitionsgemäss sämtlich Zubereitungsarten von Kaffee fallen, welche mit einer Siebträgermaschine möglich sind. Dies sind z. B. schwarzer Kaffee, Espresso, Espresso Lunge, Ristretto, etc. Ferner fallen definitionsgemäss unter Kaffeegetränke auch Zubereitungsarten mit Milch als Zusatz, wie z. B. Cappuccino oder Latte Macchiato. Die Kaffeemaschine kann hierzu auch eine Milchzubereitungseinrichtung, wie Milchschäumer, enthalten.

Die Kaffeemaschine enthält zum Auslösen eines Brühvorganges und insbesondere auch zur Auswahl der Kaffeezubereitungsart, eine Eingabeeinrichtung, z. B. mit einem Display.

Die Maschineneinheit enthält ferner eine Steuerungseinrichtung zum Betreiben der einzelnen Aggregate bzw. Einrichtungen, wie Wasserpumpe, Ventile, gegebenenfalls Kolbenantrieb, Mahlwerk oder Eingabeeinrichtung etc.

So wird insbesondere auch der Kolbenantrieb über die Steuerungseinrichtung gesteuert. Über die Eingabeeinrichtung oder über Voreinstellungen kann z. B. das Mass bzw. der Grad der Kaffeepressung festgelegt werden. Die Steuerungseinrichtung steuert dann basierend auf den entsprechenden Vorgaben zur Kaffeepressung (Mass bzw. Grad der Kaffeepressung) den auf das Kaffeepulver ausgeübten Pressdruck (Kolbendruck) über den Kolbenantrieb.

Das Verfahren zeichnet sich dadurch aus, dass die Siebträgereinrichtung zum Brühen eines Kaffees über die Linearführung mittels einer linearen Bewegung in die Maschineneinheit eingeschoben und nach Abschluss des Brühvorganges in einer linearen Gegenbewegung wieder aus der Maschineneinheit herausgezogen wird.

Die Siebträgereinrichtung kann in Vorbereitung des Brühvorganges ausserhalb der Maschineneinheit mit Kaffeepulver befüllt und in befülltem Zustand in einer Linearbewegung in die Maschineneinheit in die Brühposition eingeschoben werden.

Alternativ kann die Siebträgereinrichtung auch leer in einer Linearbewegung in die Maschineneinheit eingeschoben werden. Die Befüllung geschieht in der Maschineneinheit über integrierte Mittel zum Abgeben, insbesondere zum Erzeugen und Abgeben von Kaffeepulver.

Gemäss der ersten Ausführungsvariante, in welcher die Befüll- und die Brühposition entlang der Einschubachse hintereinander angeordnet sind, wird die Siebträgereinrichtung zum Brühen eines Kaffees über die Linearführung in einer linearen Bewegung zuerst in eine Befüllposition eingeschoben und nach dem Befüllen des Kaffeeaufnahmeraums mit Kaffeepulver in einer linearen Gegenbewegung in eine Brühposition zurückgezogen. In diesem Fall ist die Befüllposition in Einschubrichtung nach der Brühposition angeordnet.

Alternativ, d.h. wenn die Befüllposition in Einschubrichtung vor der Brühposition angeordnet ist, kann die Siebträgereinrichtung zum Brühen eines Kaffees über die Linearführung in einer linearen Bewegung zuerst in die Befüllposition eingeschoben und nach dem Befüllen des Kaffeeaufnahmeraums mit Kaffeepulver in Forstsetzung der linearen Einschubbewegung in die Brühposition weitergeschoben werden.

Gemäss der zweiten Variante, bei welcher die Siebträgereinrichtung zusammen mit der Linearführungsvorrichtung schwenkbar ist, wird die Siebträgereinrichtung zum Brühen eines Kaffees über die Linearführung in einer linearen Bewegung in die Maschineneinheit und relativ zur Linearführungsvorrichtung in eine Arbeitsposition eingeschoben. Zum Befüllen des Kaffeeaufnahmeraums mit Kaffeepulver und zum Brühen des Kaffees wird die sich relativ zur Linearführungsvorrichtung in Arbeitsposition befindliche Siebträgereinrichtung zusammen mit der Linearführungsvorrichtung relativ zur Einrichtung zum Abgeben bzw. zum Erzeugen und Abgeben von Kaffeepulver und relativ zur Brüheinheit zwischen einer Befüllposition und einer Brühposition verschwenkt.

Die Arbeitsposition kann beim Einschieben der Siebträgereinrichtung in die Maschineneinheit ausserhalb der Befüllposition liegen, so dass die Siebträgereinrichtung nach dem Einschieben in die Maschineneinheit zuerst in die Befüllposition und anschliessend in die Brühposition geschwenkt werden muss. Die Befüllposition und die Brühposition werden also durch die Kombination von Arbeitsposition der Siebträgereinrichtung und Schwenkstellung der Linearführungsvorrichtung definiert.

Die Arbeitsposition kann beim Einschieben der Siebträgereinrichtung in die Maschineneinheit bei entsprechender Schwenkstellung auch mit der Befüllposition übereinstimmen, so dass die Siebträgereinrichtung nach dem Befüllen mit Kaffeepulver nur noch in die Brühposition geschwenkt werden muss.

Nach dem Positionieren der mit Kaffeepulver befüllten Siebträgereinrichtung in der Brühposition wird gemäss beiden Ausführungsvarianten der Brühvorgang durch Vortreiben des Brühkolbens parallel zur Kolbenachse in seine Brühposition in Richtung Kaffeeaufnahmeraum durch den Kolbenantrieb eingeleitet.

Die Kolbenachse ist insbesondere senkrecht zur Einschubrichtung bzw. Einschubebene der Siebträgereinrichtung angeordnet. Die Kolbenachse verläuft insbesondere senkrecht zur Aufnahmeöffnung der Siebträgereinrichtung.

Der Kolbenstempel des Brühkolben übt die Funktion eines Kaffeepressers bzw. Tampers aus indem dieser den Kaffee im Kaffeeaufnahmeraum andrückt bzw. anpresst. Durch den mittels Steuerungseinrichtung einstellbaren Kolbendruck kann der Grad der Kaffeepressung bestimmt werden.

Der Brühkolben bleibt während des Brühvorgangs in seiner Brühposition und bildet zusammen mit der Siebträgereinrichtung die (geschlossene) Brühkammer aus. Der Brühkolben kann durch eine Arretiereinrichtung, insbesondere eine mechanische Arretiereinrichtung in der Brühposition arretiert werden. Die Arretiereinrichtung kann zum Beispiel durch den Kolbenantrieb betätigt werden.

Die Wasserpumpe pumpt nun Wasser aus einem Wassertank in die Brühkammer. Das Wasser wird unterwegs über eine Heizeinheit erhitzt. Das erhitzte Brühwasser wird über eine durch den Kolbenstempel führende Brühwassereinspeisung mit Druck in die Brühkammer geleitet.

Der gebrühte Kaffee fliesst auf der Unterseite der Siebträgereinrichtung durch eine Kaffeeauslassöffnung aus der Siebträgereinrichtung nach unten z. B. in ein bereitgestelltes Trinkgefäss.

Am Ende des Brühvorganges wird die Zufuhr von heissem Brühwasser gestoppt und der Brühwasserdruck in der Brühkammer abgebaut. Die Brühkammer wird durch Zurückbewegen des Brühkolbens in seine Ausgangsposition geöffnet und die Aufnahmeöffnung des Kaffeeaufnahmeraums wird freigegeben. Die Siebträgereinrichtung wird nun über eine geradlinige (Gegen-)Bewegung über die Linearführungsvorrichtung komplett aus der Maschineneinheit herausgezogen.

Der Kaffeetrester kann nun aus der Siebträgereinrichtung, z. B. durch Abklopfen, entfernt werden. Die Siebträgereinrichtung kann anschliessend für einen neuen Brühvorgang vorbereitet werden.

Die erfindungsgemässe Kaffeemaschine zeichnet sich durch folgende Vorteile auf:
- einfaches und schnelles Anbringen der Siebträgereinrichtung an die Maschineneinheit und einfaches und schnelles Entfernen der Siebträgereinrichtung von der Maschineneinheit, insbesondere ohne bedeutenden Kraftaufwand;
- dank dem beweglichen Brühkolben, welcher eine individuelle Kaffeepressung auch bei unterschiedlicher Befüllung des Kaffeeaufnahmeraums mit Kaffeepulver erlaubt, sind keine Siebträgereinsätze unterschiedlicher Grösse mehr notwendig;
- dank dem beweglichen Brühkolben ist kein Festziehen der Siebträgereinrichtung gegen einen (feststehenden) Stempel an der Maschineneinheit für die Kaffeepressung notwendig;
- individuelles Einstellen der Kaffeepressung dank dem über die Steuerungseinrichtung mittels Kolbenantrieb gesteuert in den Kaffeeaufnahmeraum bzw. in die Brühkammer vortreibbaren Brühkolben;
- rückstandfreier Wechsel der Kaffeesorte dank der führungslosen Abgabe von Kaffeepulver aus dem Kegelmahlwerk in den Kaffeeaufnahmeraum der Siebträgervorrichtung.

Im Folgenden wird der Erfindungsgegenstand anhand von besonderen Ausführungsbeispielen, welche in den beiliegenden Figuren dargestellt sind, näher erläutert. Es zeigen jeweils schematisch:
- Figur 1a:: perspektivische Ansicht einer ersten Ausführungsform einer Anordnung von Brüheinheit und Mahlwerk sowie von Linearführungsvorrichtung und Siebträgereinrichtung einer Siebträgennaschine von schräg vorne;
- Figur 1b:: Querschnitt durch die Anordnung gemäss Figur 1a;
- Figur 1c:: weitere perspektivische Ansicht der Anordnung gemäss Figur 1a von schräg hinten;
- Figur 2:: perspektivische Ansicht der Siebträgereinrichtung von schräg oben;
- Figur 3:: perspektivische Ansicht der Linearführungsvorrichtung gemäss Figur 1a ohne Siebträgereinrichtung von schräg unten;
- Figur 4a:: perspektivische Ansicht einer zweiten Ausführungsform einer Anordnung von Brüheinheit und Mahlwerk sowie von Linearführungsvorrichtung und Siebträgereinrichtung einer Siebträgennaschine von schräg unten;
- Figur 4b:: perspektivische Ansicht der Anordnung nach Figur 4a von vorne;
- Figur 4c:: weitere perspektivische Ansicht der Anordnung nach Figur 4a von vorne;
- Figur 5:: schematische Ansicht einer Siebträgennaschine mit einer Anordnung nach Figure 1a bis 1c;
- Figur 6:: perspektivische Ansicht des Mahlwerks gemäss Figur 1a bis 1c von schräg unten.

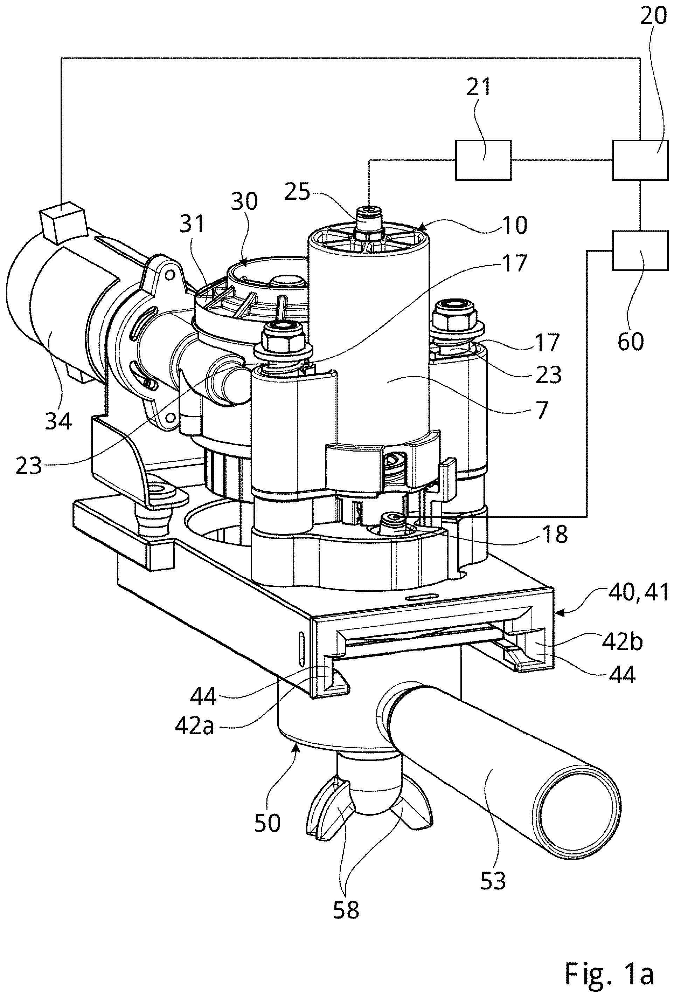

Gemäss einer ersten Ausführungsform nach **Figur 1a bis 1c** enthält die Kaffeemaschine 1 eine Brüheinheit 10 und eine Einrichtung zum Erzeugen und Abgeben von Kaffeepulver 30 mit einem Kegelmahlwerk 31. Unterhalb der Brüheinheit 10 und der Einrichtung 30 ist eine Halte- und Führungseinrichtung 40 mit einer Linearführungsvorrichtung 41 angeordnet. Die Linearführungsvorrichtung 41 enthält zwei in einem Abstand zueinander angeordnete, parallel zueinander verlaufende Führungsschienen 42a, 42b, welche jeweils einen Führungsschlitz 44 zur gleitenden Aufnahme von Führungsleisten 55 an einer Siebträgereinrichtung 50 enthalten.

Ferner umfasst die Kaffeemaschine 1 eine Siebträgereinrichtung 50 mit einem Siebträgergehäuse 54 und einem Griffkörper 53 zum Halten der Siebträgereinrichtung 50. Aussen am Siebträgergehäuse 54 sind zwei, beidseits einer Aufnahmeöffnung 56 seitlich und parallel zueinander verlaufende Führungsleisten 55 zum Einschieben in die Führungsschlitze 44 der Führungsschienen 42a, 42b angeordnet.

Die Brüheinheit 10 und die Einrichtung 30 mit Kegelmahlwerk 31 sind entlang der Einschubachse EA hintereinander angeordnet, wobei die Einrichtung 30 mit Kegelmahlwerk 31 in Einschubrichtung ER nach der Brüheinheit 10 angeordnet ist.

Die Siebträgereinrichtung 50 ist über die seitlich in die Führungsschlitze 44 der Führungsschienen 42a, 42b eingreifenden Führungsleisten 55 in die Maschineneinheit 2 der Kaffeemaschine 1 einschiebbar. Die Maschineneinheit 2 entspricht der Kaffeemaschine 1 ohne Siebträgereinrichtung 50.

Die Siebträgereinrichtung 50 ist unter anderem in eine Befüllposition FS einschiebbar, in welcher die Siebträgereinrichtung 50 unterhalb der Einrichtung 30 bzw. dem Mahlwerk 31 angeordnet ist. Die Halte- und Führungseinrichtung 40 bildet einen Endanschlag 45 aus, welcher eine Einschubbegrenzung darstellt und gleichzeitig die exakte Positionierung der Siebträgereinrichtung 50 in der Befüllposition FS zum Befüllen der Siebträgereinrichtung 50 mit Kaffeepulver 22 sicherstellt. Das heisst, die Siebträgereinrichtung 50 nimmt bei Erreichen des Anschlags 45 die Befüllposition FS ein.

Das Kegelmahlwerk 31 enthält ein mehrteiliges Gehäuse 35, in welchem der Mahlkegel 32 und der Mahlring 33, welcher den Mahlkegel 32 umgibt, angeordnet sind. Der Mahlkegel 32 verjüngt sich entlang der Kegelachse ausgehend von der Kegelbasis nach oben. Der Mahlring 33 ist im Gehäuse 35 über Lager, wie Kugellager, drehbar um die Kegelachse des Mahlkegels 32 gelagert und wird über einen Elektromotor 34 angetrieben. Zwischen dem Mahlring 33 und dem Mahlkegel 32 wird der Mahlspalt ausgebildet, in welchen die Kaffeebohnen von oben zugeführt und durch den um die Kegelachse drehenden Mahlring gemahlen werden. Das gemahlene Kaffeepulver verlässt am unteren Ende im Bereich der Kegelbasis den Mahlspalt und fällt schwerkraftbedingt nach unten.

Der Mahlkegel 32 ist starr, d.h. unbewegt angeordnet und an seinen beiden Kegelenden jeweils über mehrere Verbindungsstege 36a, 36b mit dem Gehäuse 35 verbunden. Die Verbindungsstege 36a, 36b verlaufen ausgehend von der Kegelachse sternförmig radial nach aussen zum Gehäuse 35 hin.

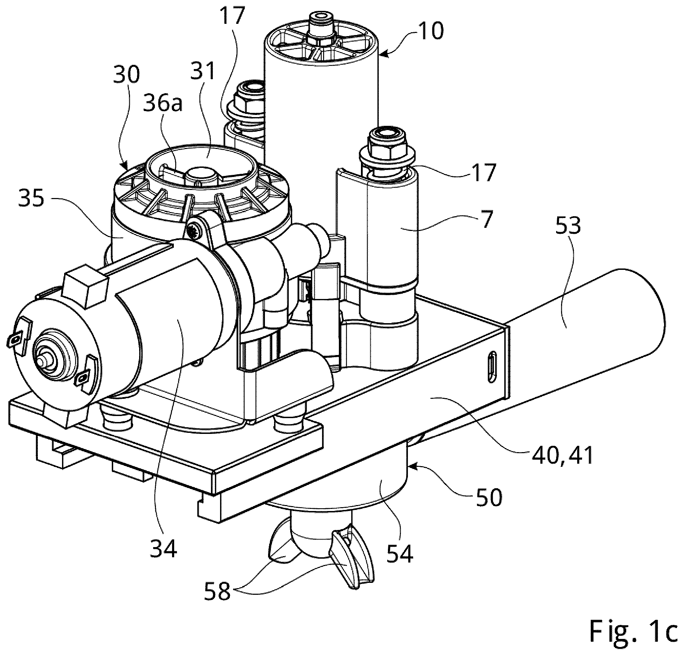

Am oberen Ende des Mahlkegels werden zwischen den Verbindungsstegen 36a mehrere Durchlassöffnungen zum Durchlassen von Kaffeebohnen in Schwerkraftrichtung G nach unten in das Kegelmahlwerk 31 ausgebildet (siehe Figur 1c).

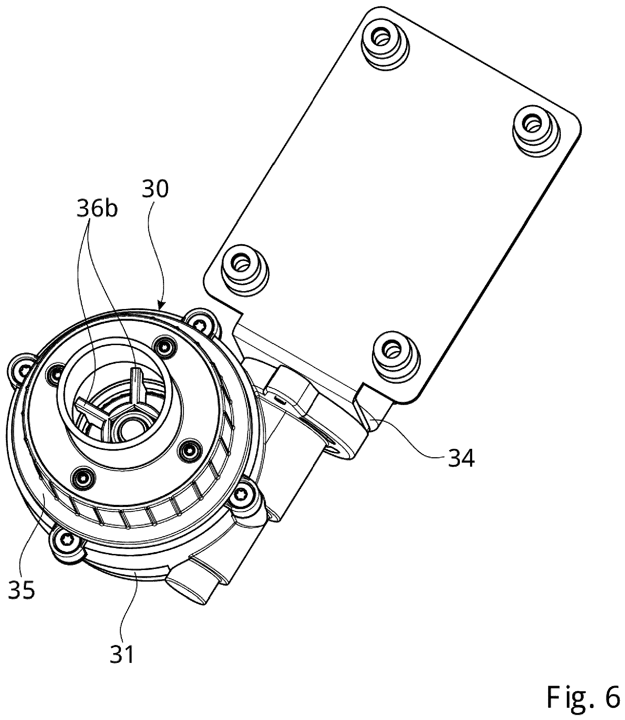

Am unteren Ende des Mahlkegels, d.h. an der Kegelbasis, werden zwischen den Verbindungsstegen 36b mehrere Durchlassöffnungen zum Durchlassen von Kaffeepulver 22 aus dem Kegelmahlwerk 31 in Schwerkraftrichtung G nach unten in den Kaffeeaufnahmeraum 51 der Siebträgereinrichtung 50 ausgebildet (siehe Figur 6).

Es ist allerdings nicht zwingend, dass die Kaffeemaschine ein integriertes Mahlwerk enthält wie in den Figuren dargestellt. Das Mahlwerk kann zum Beispiel auch derart an der Kaffeemaschine angeordnet bzw. angegliedert sein, dass die Siebträgereinrichtung bereits vor dem Einschieben in die Maschineneinheit mit Kaffeepulver befüllt wird. Ferner ist es auch möglich, dass die Kaffeemaschine kein Mahlwerk enthält und das Kaffeepulver von einer separaten Kaffeemühle oder aus einem Vorratsspeicher bezogen wird.

Die Siebträgereinrichtung 50 enthält einen in das Siebträgergehäuse 54 eingelassenen Siebeinsatz 49 mit einem, den Boden des Siebeinsatzes 49 ausbildenden Brühsieb 52. Der Siebeinsatz 49 bildet den Kaffeeaufnahmeraum 51 zur Aufnahme des Kaffeepulvers 22 aus. Dieser ist gegen oben offen. Entsprechend weist der Siebeinsatz 49 gegen oben eine Aufnahmeöffnung 56 auf. Diese liegt dem Brühsieb 52 gegenüber. Der Kaffeeaufnahmeraum 51 ist zylindrisch ausgebildet, weist jedoch im Bereich der Aufnahmeöffnung 56 eine umlaufende, trichterförmige Erweiterung 57 auf. Der Siebeinsatz 49 ist in diesem Ausführungsbeispiel mit dem Siebträgergehäuse 54 fest verbunden und entsprechend nicht herausnehmbar. Der Siebeinsatz 49 kann jedoch auch herausnehmbar sein. Ebenso kann der Siebeinsatz integraler Bestandteil des Siebträgergehäuses 54 sein.

Im Anschluss an die Befüllung des Kaffeeaufnahmeraums 51 der Siebträgereinrichtung 50 mit Kaffeepulver 22 wird die Siebträgereinrichtung 50 in einer linearen Gegenbewegung über die Linearführungsvorrichtung 41 in die Brühposition BS zurückgezogen. In der Brühposition BS befindet sich die Siebträgereinrichtung 50 unterhalb der Brüheinheit 10.

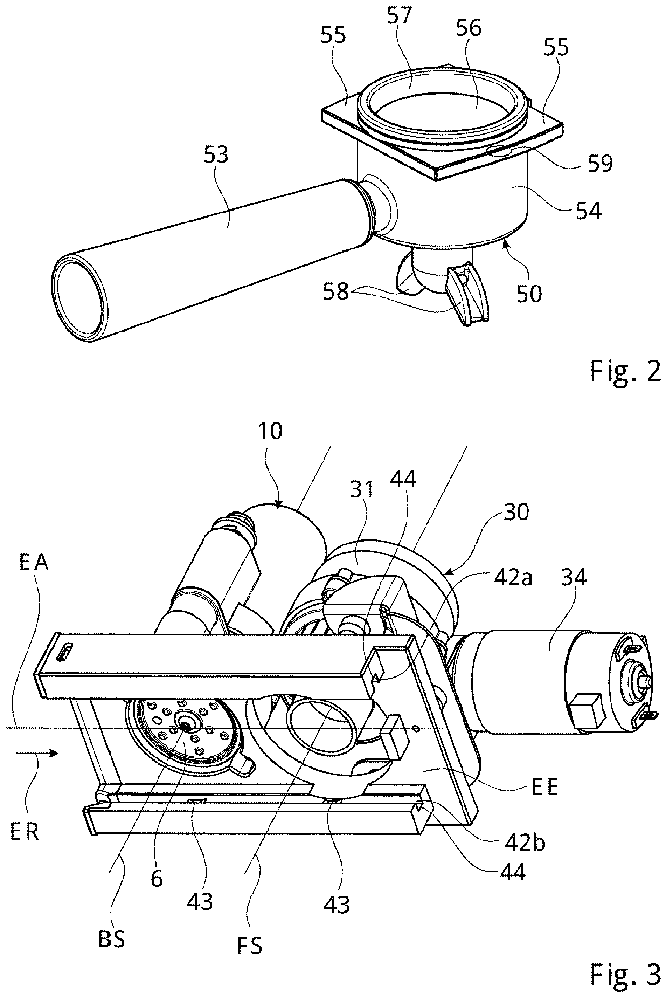

Wie aus den **Figuren 2 und 3** näher hervorgeht, weisen die Linearführungsvorrichtung 41 und die Siebträgereinrichtung 50 miteinander kooperierende Rastmittel 43, 59, welche eine exakte, selbstzentrierende Positionierung der Siebträgereinrichtung 50 in der Brühposition BS erlauben. Im vorliegenden Ausführungsbeispiel werden im Führungsschlitz 44 der Führungsschienen 42a, 42b Rastkerben 43 ausgebildet, in welche an den Führungsleisten 55 der Siebträgereinrichtung 50 angeordnete, federbelastete Kugeln 59 eingreifen. Die Rastkerben 43 bilden in Einschubrichtung ER und entgegen der Einschubrichtung ER jeweils eine Einlauframpe aus. Diese soll den Kraftaufwand beim Herausschieben bzw. Herausziehen der Siebträgereinrichtung 50 aus der Rastposition reduzieren, so dass die Siebträgereinrichtung 50 mühelos über die Rastposition hinweg geschoben bzw. hinweg gezogen oder aus der Rastposition wieder herausgezogen bzw. herausgeschoben werden kann.

Die Brüheinheit 10 enthält einen Brühkolben 4 mit einem Kolbenschaft 5, welcher in einem Kolbenschaftgehäuse 7 geführt ist sowie einen am unteren Ende, d.h. zur Siebträgereinrichtung 50 hin, angeordneten Kolbenstempel 6, welcher in einem Kolbenstempelführungsgehäuse 19 geführt ist. Das Kolbenstempelführungsgehäuse 19 umfasst ein Kolbenschaftführungsrohr 15, durch welches der Kolbenschaft 5 vom Kolbenschaftgehäuse 7 in das Kolbenstempelführungsgehäuse 19 geführt ist. Die Kolbenachse KA ist senkrecht zur Einschubrichtung ER bzw. Einschubebene EE der Siebträgereinrichtung 50 und verläuft entsprechend auch senkrecht zur Aufnahmeöffnung 56 der Siebträgereinrichtung 50.

Zum Einleiten des Brühvorganges wird der Brühkolben 4 durch einen Kolbenantrieb 21 aus seiner Ausgangsposition AK in Schwerkraftrichtung G nach unten zum Kaffeeaufnahmeraum 51 der Siebträgereinrichtung 50 hin bewegt. Der Kolbenstempel 6 wird dabei in den Kaffeeaufnahmeraum 51 hinein bewegt und drückt bzw. presst das Kaffeepulver 22 zusammen. In anderen Worten wird mit dem Brühkolben 4 das so genannte «Tampern» ausgeführt. Bei Erreichen der Brühposition BK wird der Vortrieb des Brühkolbens 4 beendet. Der durch den Kolbenstempel 6 verschlossene Kaffeeaufnahmeraum 51 bildet nun eine Brühkammer 3 aus.

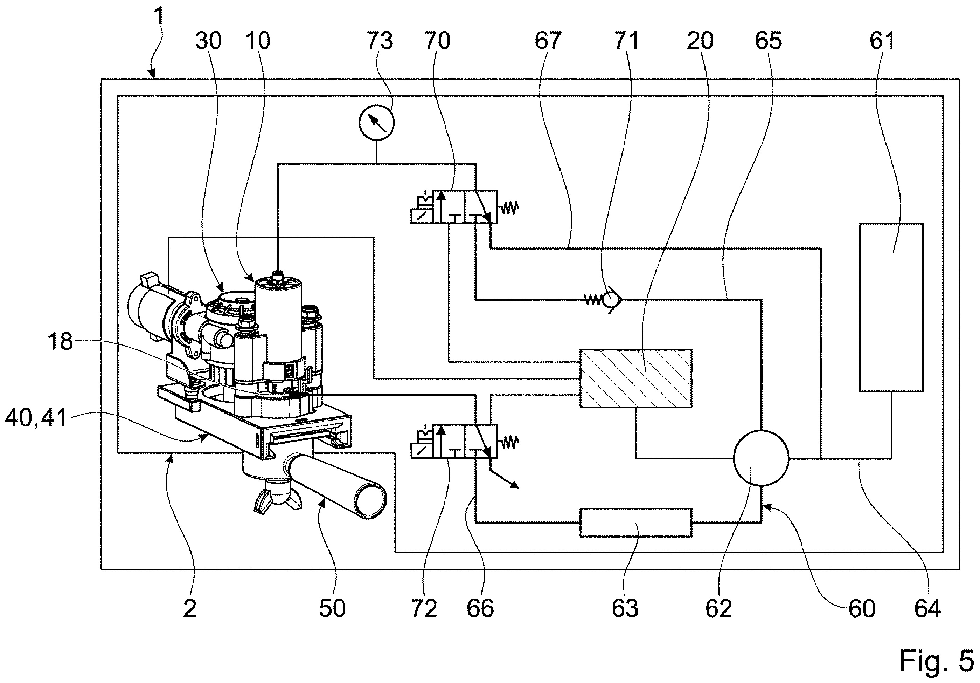

Der Kolbenantrieb 21 und damit auch der Kolbendruck, welcher wiederum ein Mass für die Kaffeepressung ist, wird über die Steuerungseinrichtung 20 gesteuert. Der Kolbenantrieb 21 kann ein elektrischer Antrieb oder ein hydraulischer Antrieb sein. Bei Letzterem wird, wie weiter unten noch näher erläutert, eine Hydraulikflüssigkeit, wie Wasser über eine Einspeisung 25 in eine Druckkammer 9 eingeleitet. Ein hydraulischer Antrieb des Brühkolbens 4 kann, wie anhand der Figur 5 weiter unten noch erläutert, über die Wasserpumpe 62 der Brühwasseraufbereitungseinrichtung 60 erfolgen.

Die Kaffeemaschine bzw. Maschineneinheit 2 enthält im Weiteren eine Brühwasseraufbereitungseinrichtung 60 mit einem Wassertank 61, einer Wasserpumpe 62 und einer Heizeinheit 63 zum Zuführen von heissem Brühwasser unter Druck in die Brühkammer 3 (siehe auch Figur 5). Das heisse Brühwasser wird über eine durch den Kolbenstempel 6 geführte Brühwassereinspeisung 18 unter Druck in die Brühkammer 3 geleitet.

Die Siebträgereinrichtung 50 enthält eine unterhalb des Brühsiebes 52 angeordnete Kaffeeauslassöffnung 58. Durch diese fliesst der in der Brühkammer 3 gebrühte und durch das Brühsieb 52 gepresste Kaffee nach unten weg, z. B. in ein Trinkgefäss (nicht dargestellt).

Der Brühkolben 4 wirkt mit einer Rückstellfeder 8 zusammen. Diese entspricht in vorliegender Ausführungsform einer den Kolbenschaft 5 umgebenden Druckfeder 8 in Form einer Schraubenfeder. Die Druckfeder 8, welche beim Vortreiben des Brühkolbens 4 zur Siebträgereinrichtung 50 hin zusammengedrückt wird, schiebt nach Abschluss des Brühvorganges mit dem Abbau des Kolbendruckes den Brühkolben 4 wieder zurück in seine Ausgangsposition AK. Bei einem Kolbenantrieb 21, wie z. B. bei einem elektrischen Antrieb, welcher den Brühkolben 4 aktiv zurückbewegt, sind Rückstellmittel, wie Rückstellfedern, nicht zwingend notwendig.

Der Brühkolben 4 weist ferner eine Kolbenführungshülse 24 auf, mittels welcher der Brühkolben 4 im Kolbenschaftgehäuse 7 axial geführt ist. Die Kolbenführungshülse 24 ist im oberen Endabschnitt des Brühkolben 4 zur Druckkammer 9 hin angeordnet.

Gemäss vorliegender Ausführungsform wird der Brühkolben 4 durch eine Arretiereinrichtung 11 in der Brühposition BK gegen eine, der Vortriebsrichtung des Brühkolbens 4 entgegengesetzte, axiale Richtung arretiert. Die Arretierung dient unter anderem der Entlastung des Kolbenantriebs 21. So ist der durch den Kolbenantrieb 21 auf den Brühkolben 4 ausgeübte Kolbendruck zum Pressen des Kaffeepulvers 22 wesentlich geringer als der in der Brühkammer 3 durch die Wasserpumpe 62 der Brühwasseraufbereitungseinrichtung 60 aufgebaute Brühwasserdruck, welcher als Gegendruck auf den Brühkolben 4 wirkt. Dank der Arretierung des Brühkolbens 4 während des Brühvorganges muss mit dem Kolbenantrieb 21 kein dem Brühwasserdruck entsprechender Gegendruck aufgebaut werden. Die Arretiereinrichtung 11 ist allerdings nicht zwingend. Ferner kann eine Arretierung kann auch durch den Kolbenantrieb 21 selbst erfolgen.

Die Ausführungsform nach Figur 1a bis 1c zeigt eine besondere Ausführung einer Arretiereinrichtung, welche sich dadurch auszeichnet, dass diese ebenfalls über den Kolbenantrieb 21 ausgelöst wird.

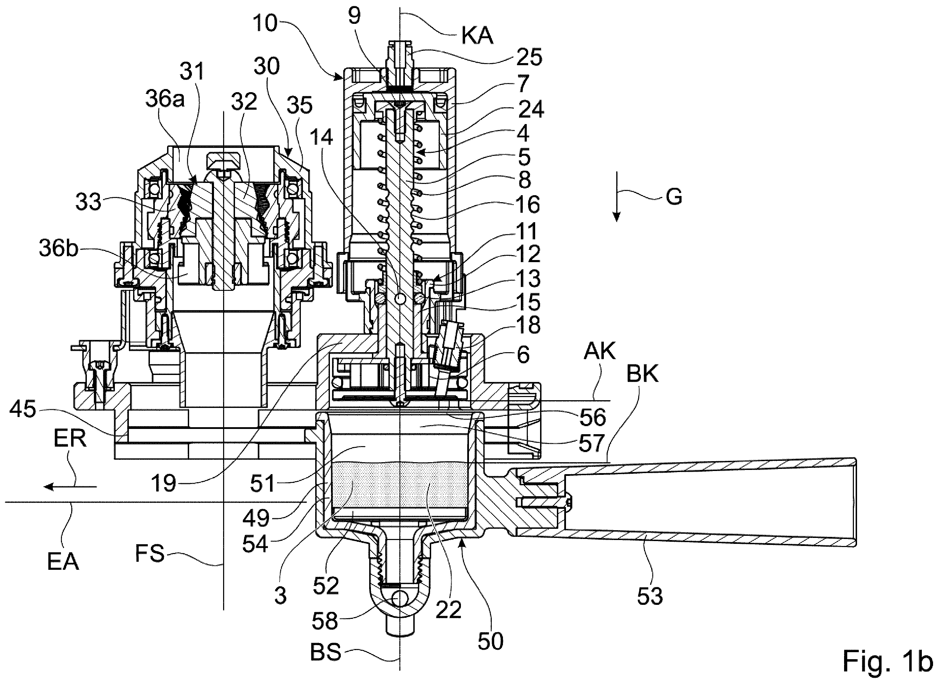

Im vorliegenden Fall übt der Kolbenantrieb 21 über eine Hydraulikpumpe mittels einer Hydraulikflüssigkeit einen hydraulischen Druck auf den Brühkolben 4 aus. Hierzu wird eine Hydraulikflüssigkeit über eine Einspeisung 25, wie Kolbenwassereinspeisung, in eine Druckkammer 9 eingeleitet, welche unter anderem durch den beweglichen Brühkolben 4 begrenzt wird. Die Druckkammer 9 geht aus Figur 1b nicht besonders gut hervor, da diese sich erst durch die Bewegung des Brühkolbens 4 aus seiner Ausgangsposition AK nach unten in die Brühposition BK räumlich ausdehnt.

Wie anhand der Figur 5 noch näher erläutert, kann die Hydraulikpumpe der Wasserpumpe 62 Brühwasseraufbereitungseinrichtung 60 entsprechen und die Hydraulikflüssigkeit kann Wasser aus dem Wassertank 61 der Brühwasseraufbereitungseinrichtung 60 sein.

Durch den Druck der in die Druckkammer 9 einströmenden Hydraulikflüssigkeit (z. B. Wasser) bewegt sich der Brühkolben 4 entgegen der Rückstellkraft der Rückstellfeder 8 aus seiner Ausgangsposition AK nach unten in Richtung Siebträgereinrichtung 50 in die Brühposition BK.

Die Druckkammer 9 wird gegen oben durch das Kolbenschaftgehäuse 7 begrenzt. Das Kolbenschaftgehäuse 7 ist über zwei Verbindungsschrauben 23 relativ zum Kolbenstempelführungsgehäuse 19 und entsprechend gegenüber dem Kolbenschaftführungsrohr 15 entlang der Verbindungsschrauben 23 axial beweglich gelagert. Die Verbindungsschrauben 23 bilden entsprechend einen, insbesondere gewindefreien Führungsabschnitt zur axialen Führung des axial beweglichen Kolbenschaftgehäuses 7 aus. Das Kolbenschaftgehäuse 7 wird über zwei, das Kolbenschaftgehäuse 7 nach unten drückenden Druckfedern 17 in einer Ausgangsposition gehalten. Die Druckfedern 17 sind als Schraubenfedern ausgebildet und umgeben jeweils die Verbindungsschrauben 23.

Mit Erreichen der Brühposition BK ist die axiale Bewegung des Brühkolbens 4 nach unten beendet. Der in der Druckkammer 9 weiter steigende Druck übt nun eine entsprechende Kraft auf das Kolbenschaftgehäuse 7 aus, wodurch sich dieses entgegen der Rückstellkraft der Druckfedern 17 leicht nach oben, in eine der Kolbenbewegung entgegengesetzte Richtung bewegt.

Mit dem Kolbenschaftgehäuse 7 ist auch ein ringförmiges, das Kolbenschaftführungsrohr 15 umgebendes Betätigungselement 12 der Arretiereinrichtung 11 verbunden, welches entsprechend ebenfalls nach oben bewegt wird. Das Betätigungselement 12 bildet in einem oberen Abschnitt einen radialen Abstand zum Kolbenschaftführungsrohr 15 aus, wodurch ein ringförmiger Hohlraum bzw. Spalt entsteht. In einem unteren Abschnitt ist das Betätigungselement 12 in einem Gleitkontakt mit dem Kolbenschaftführungsrohr 15 und liegt diesem an. Der obere und untere Abschnitt gehen mittels einer Führungsrampe ineinander über.

Auf der Höhe des Betätigungselement 12 weist das Kolbenschaftführungsrohr 15 radiale Durchgangsöffnungen 14 auf, in welchen Kugelkörper 13 beweglich gelagert sind.

Der Kolbenschaft 4 weist eine Mehrzahl von ringförmig umlaufenden Vertiefungen 16 auf, in welche die Kugelkörper 13 eingreifen können.

In der nicht arretierten Position wird das Kolbenschaftgehäuse 7 und mit diesem das Betätigungselement 12 durch die Rückstellkraft der Druckfedern 17 in einer unteren Ausgangsstellung gehalten. Der obere Abschnitt des Betätigungselement 12 befindet sich mit dem ringförmigen Hohlraum bzw. Spalt auf Höhe der radialen Durchgangsöffnungen 14. Die Kugelkörper 13 sind aus den radialen Durchgangsöffnungen 14 zurückversetzt und greifen in den ringförmigen Hohlraum ein.

Erreicht nun der Brühkolben 4 die Brühposition BK so wird wie erwähnt das Kolbenschaftgehäuse 7 zusammen mit dem Betätigungselement 12 in axialer Richtung leicht angehoben. Dadurch bewegt sich der untere Abschnitt des Betätigungselements 12 zusammen mit dem ringförmige Spalt nach oben wodurch die Kugelkörper 13 durch den sich ebenfalls nach oben bewegenden, unteren Abschnitt radial nach innen in die Durchgangsöffnungen 14 zurückgedrängt werden. Die Führungsrampe zwischen dem oberen und unteren Abschnitt sorgt dafür, dass sich die Kugelkörper 13 nicht mit dem Betätigungselement 12 verkeilen, sondern gleichmässig in die Durchgangsöffnungen 14 hinein bewegen.

Die in die radialen Durchgangsöffnungen 14 zurück gedrängten Kugelkörper 13 greifen nun auf der anderen Seite in eine Vertiefung 16 am Kolbenschaft 5 ein und bewirkten die Arretierung des Brühkolbens 4 in der Brühposition BK. Die Kugelkörper 13 wirken folglich als Arretierkörper.

Die Arretierung bleibt bestehen solange der hydraulische Druck in der Druckkammer 9 das Kolbenschaftgehäuse 7 entgegen der Rückstellkraft der Druckfedern 17 nach oben zu drücken vermag.

Nach Abschluss des Brühvorganges wird der Druck in der Druckkammer 9 abgebaut wodurch das Kolbenschaftgehäuse 7 durch die Rückstellkraft der Druckfedern 17 zusammen mit dem Betätigungselement 12 nach unten in die Ausgangsstellung zurückweicht. Der obere Abschnitt des Betätigungselement 12 kommt zusammen mit dem ringförmigen Spalt zwischen Betätigungselement 12 und Kolbenschaftführungsrohr 15 wieder auf der Höhe der radiale Durchgangsöffnungen 14 zu liegen.

Durch den Abbau des Drucks in der Druckkammer 9 überwiegt nun ferner wieder die von der Druckfeder 8 auf den Brühkolben 4 ausgeübte Rückstellkraft. Durch die Druckkraft der Druckfeder 8 bzw. durch den von der Druckfeder 8 nach oben in Bewegung versetzten Brühkolben 4 werden die Kugelkörper 13 aus der Vertiefung 16 heraus in die radiale Durchgangsöffnungen 14 und den dahinter liegenden ringförmigen Spalt zurückgedrängt.

Die Arretierung ist aufgehoben und der Brühkolben 4 weicht durch die Rückstellkraft der Druckfeder 8 zurück nach oben in die Ausgangsposition AK.

Die **Figur 5** zeigt eine besondere Weiterentwicklung der Kaffeemaschine 1, welche sich dadurch auszeichnet, dass der Brühkolben 4 durch die Wasserpumpe 62 der Brühwasseraufbereitungseinrichtung 60 angetrieben bzw. in die Brühposition BK vorgetrieben wird. Die Wasserpumpe 62 bezieht das Wasser über eine Zuführwasserleitung 64 aus einem Wassertank 61. Die Wasserpumpe 62 ist über eine Brühwasserleitung 66 mit der Brühwassereinspeisung 18 am Kolbenstempel 6 verbunden. Entlang der Brühwasserleitung 66 ist eine Heizeinheit 63, z. B. ein Thermoblock bzw. Durchlauferhitzer, zum Aufheizen des durch die Brühwasserleitung 66 fliessenden Brühwassers angeordnet. Die Wasserpumpe 62 pumpt Wasser aus dem Wassertank 61 über die Brühwasserleitung 66 unter Druck in die Brühkammer 3. Das Brühwasser wird auf seinem Weg durch die Brühwasserleitung 66 durch die Heizeinheit 63 aufgeheizt.

An der Brühwasserleitung 66 ist ein 3/2 Wegeventil 72 angeordnet, welches einen weiteren Anschluss zum Ablassen von Restwasser in einen Auffangbehälter, wie Tropfschale, im Anschluss an den Brühvorgang enthält. Das 3/2 Wegeventil 72 wird über die Steuerungseinrichtung 20 geschaltet.

Die Wasserpumpe 62 ist im Weiteren mit einer Kolbenwasserleitung 65 verbunden, über welche Wasser zum Vortreiben des Brühkolbens 4 von der Ausgangsposition AK in die Brühposition BK aus dem Wassertank 61 in eine Druckkammer 9 im Kolbenschaftgehäuse 7 (siehe Figur 1b) gepumpt wird.

Die Kolbenwasserleitung 65 weist ein Rückschlagventil 71 auf, welches den Rückfluss des Wassers aus der Druckkammer 9 in die Wasserpumpe 62 verhindert. Ferner ist zwischen dem Rückschlagventil 71 und der Druckkammer 9 ein 3/2 Wegeventil 70 in der Kolbenwasserleitung 65 angeordnet. An das 3/2 Wegeventil 70 ist eine Rückführwasserleitung 67 angeschlossen, über welche Kolbenwasser zurück in den Wassertank 61 geleitet werden kann. An der Kolbenwasserleitung 65 befindet sich auch ein Manometer 73 zum Überwachen des Drucks in der Druckkammer 9.

Zum Vortreiben des Brühkolbens 4 von der Ausgangsposition AK in die Brühposition BK pumpt die Wasserpumpe 62 Wasser aus dem Wassertank 61 in die Kolbenwasserleitung 65 und baut einen durch die Steuerungseinrichtung 20 vorgegebenen Kolbendruck auf.

Nachdem der Brühkolben 4 seine Brühposition BK erreicht hat und arretiert ist, pumpt die Wasserpumpe 62 Wasser unter Erhitzung aus dem Wassertank 61 durch die Brühwasserleitung 66 in die Brühkammer 3 und baut einen Brühdruck auf, welcher in der Regel höher ist als der Kolbendruck.

Die Wasserpumpe 62 wird über die Steuerungseinrichtung 20 zwischen der Kolbenwasserleitung 65 und der Brühwasserleitung 66 bzw. zwischen Kolbenwassereinspeisung und Brühwassereinspeisung geschaltet. Das Rückschlagventil 71 in der Kolbenwasserleitung 65 verhindert einen Druckverlust in der Druckkammer 9 beim Umschalten der Wasserpumpe 62 von der Kolbenwasserleitung 65 auf die Brühwasserleitung 66.

Am Ende des Brühvorganges wird der Druck in der Brühwasserleitung 66 abgebaut und das 3/2 Wegeventil 72 wird durch die Steuerungseinrichtung 20 so geschaltet, dass das Restwasser in einen Auffangbehälter (nicht gezeigt) abgelassen wird.

Des Weiteren wird auch in der Kolbenwasserleitung 65 der Druck abgebaut und das 3/2 Wegeventil 70 wird so geschaltet, dass das Kolbenwasser über die Rückführwasserleitung 67 zurück in den Wassertank 61 geleitet wird.

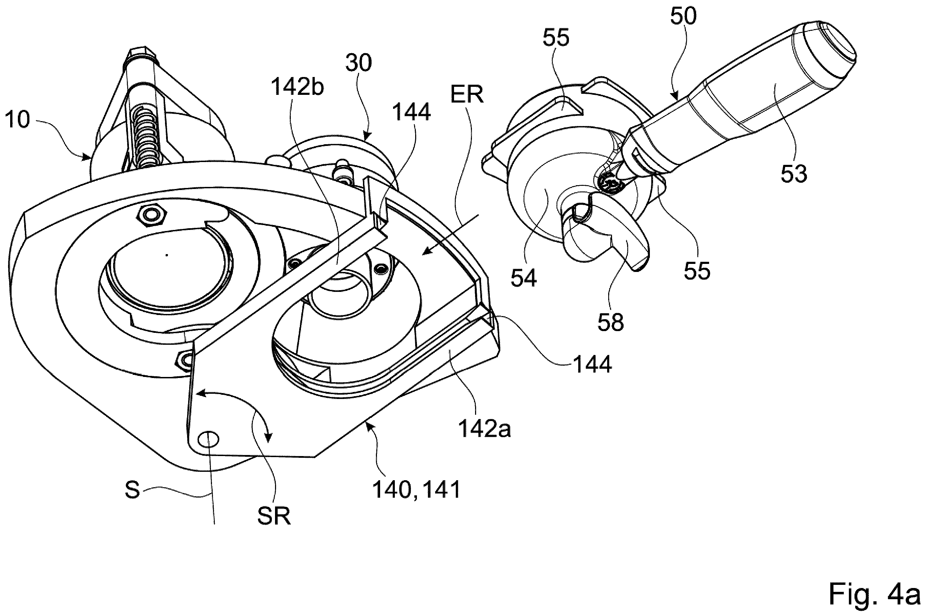

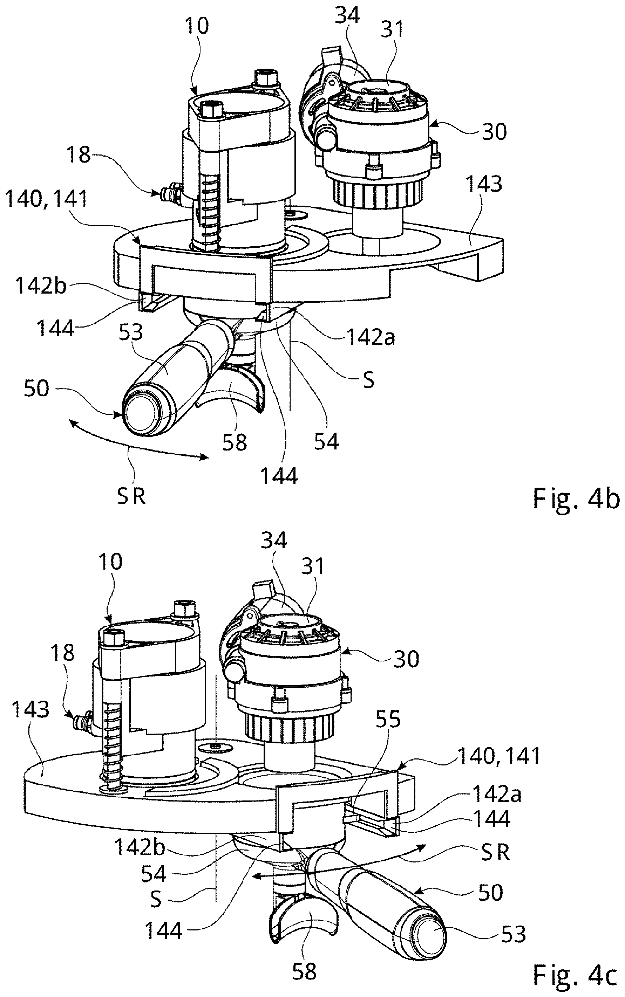

Die **Figuren 4a bis 4c** zeigen eine zweite Ausführungsform einer Maschineneinheit bzw. einer Halte- und Führungseinrichtung 140. Die Halte- und Führungseinrichtung 140 umfasst eine Trägerplatte 143, an welcher eine Linearführungsvorrichtung 141 über eine Schwenkachse S schwenkbar angeordnet ist.

Die Linearführungsvorrichtung 141 enthält ebenfalls zwei in einem Abstand zueinander angeordnete, parallel zueinander verlaufende Führungsschienen 142a, 142b, welche jeweils einen Führungsschlitz 144 zur gleitenden Aufnahme von Führungsleisten 55 einer Siebträgereinrichtung 50 enthalten. Die Siebträgereinrichtung 50 entspricht der Siebträgereinrichtung 50 gemäss der ersten Ausführungsform nach den Figuren 1a bis 1c, 2 und 3.

Ebenso entsprechen auch die Einrichtung zum Erzeugen und Abgeben von Kaffeepulver 30 sowie die Brüheinheit 10 insbesondere jenen der ersten Ausführungsform gemäss den Figuren 1a bis 1c.

Die Einrichtung 30 und die Brüheinheit 10 und entsprechend auch die Befüllposition FS und die Brühposition BS der Siebträgereinrichtung 50 sind in der zweiten Ausführungsform allerdings in Einschubrichtung ER nicht hintereinander angeordnet. Die Einrichtung 30 und die Brüheinheit 10 und entsprechend die Befüllposition FS und die Brühposition BS sind vielmehr entlang einer (geometrischen) Kreislinie angeordnet, deren Kreismittelpunkt durch die Schwenkachse S ausgebildet wird.

Die Siebträgereinrichtung 50 ist nun in einer Linearbewegung in die Linearführungsvorrichtung 141 in eine Arbeitsposition einschiebbar. Die Arbeitsposition kann durch eine Einschubbegrenzung, wie Anschlag, festgelegt sein. Die Arbeitsposition befindet sich auf derselben Kreislinie, auf welcher auch die Befüllposition FS und die Brühposition BS angeordnet sind. Durch Schwenken der Siebträgereinrichtung 50 in Schwenkrichtung SR um die Schwenkachse S kann nun die Siebträgereinrichtung 50 abwechselnd in die Befüllposition FS und in die Brühposition BS geschwenkt werden.

Da gemäss dieser Ausführungsvariante nur eine Einschubposition, nämlich die Arbeitsposition, vorliegt, kann diese durch einen Anschlag definiert werden. Rastmittel, wie diese im Fall von zwei, hintereinander angeordneten Einschubpositionen gemäss der ersten Ausführungsform vorgesehen sind, sind hier nicht notwendig.

## Patentansprüche

1. Kaffeemaschine (1), enthaltend eine Maschineneinheit (2) und eine von der Maschineneinheit (2) abnehmbare Siebträgereinrichtung (50) mit einem Kaffeeaufnahmeraum (51) und einem Brühsieb (52), wobei die Maschineneinheit (2) einen beweglich gelagerten Brühkolben (4), eine Brühwasseraufbereitungseinrichtung (60) zum Erzeugen und Abgeben von heissem Wasser unter Druck in den Kaffeeaufnahmeraum (51) der Siebträgereinrichtung (50), und eine Halte- und Führungseinrichtung (40) zum Aufnehmen und Haltern der Siebträgereinrichtung (50) an der Maschineneinheit (2) enthält, und die Halte- und Führungseinrichtung (40) eine Linearführungsvorrichtung (41) zum linearen Einschieben der Siebträgereinrichtung (50) in die Maschineneinheit (2) umfasst, und die in der Linearführungsvorrichtung (41) gehalterte Siebträgereinrichtung (50) in der Maschineneinheit (2) in eine Brühposition (BS) zum Brühen eines Kaffees bewegbar ist,
**dadurch gekennzeichnet, dass**
die Maschineneinheit (2) eine Einrichtung (30) zum Abgeben von Kaffeepulver in den Kaffeeaufnahmeraum (51) der Siebträgereinrichtung (50) enthält, und die in der Linearführungsvorrichtung (41) gehalterte Siebträgereinrichtung (50) in der Maschineneinheit (2) zum Abgeben von Kaffeepulver in den Kaffeeaufnahmeraum (51) der Siebträgereinrichtung (50) in eine von der Brühposition (BS) verschiedene Befüllposition (FS) bewegbar ist.

2. Kaffeemaschine (1) nach Anspruch 1, **dadurch gekennzeichnet, dass**, die Linearführungsvorrichtung (41) zwei voneinander beabstandete, parallel verlaufende Führungskonturen umfasst und der Kaffeeaufnahmeraum (51) in einem Siebträgergehäuse (54) der Siebträgereinrichtung (50) angeordnet ist und seitlich am Siebträgergehäuse (54) Führungskörper (55) angeordnet sind, welche im Zusammenwirken mit der Linearführungsvorrichtung (41) eine Linearführung ausbilden.

3. Kaffeemaschine (1) nach einem der Ansprüche 1 bis 2, **dadurch gekennzeichnet, dass** die Siebträgereinrichtung (50) über die Linearführungsvorrichtung (41) in einer linearen Bewegung in die Brühposition (BS) schiebbar ist.

4. Kaffeemaschine (1) nach einem der Ansprüche 1 bis 3, **dadurch gekennzeichnet**, die Einrichtung (30) zum Abgeben von Kaffeepulver eine Einrichtung (30) zum Erzeugen und Abgeben von Kaffeepulver in den Kaffeeaufnahmeraum (51) der Siebträgereinrichtung (50) ist.

5. Kaffeemaschine (1) nach einem der Ansprüche 1 bis 4, **dadurch gekennzeichnet, dass** die Siebträgereinrichtung (50) über die Linearführungsvorrichtung (41) in einer linearen Bewegung in die Befüllposition (FS) schiebbar ist, in welcher der Kaffeeaufnahmeraum (51) der Siebträgereinrichtung (50) mit Kaffeepulver befüllbar ist.

6. Kaffeemaschine (1) nach einem der Ansprüche 1 bis 5, **dadurch gekennzeichnet, dass** die in der Linearführungsvorrichtung (41) gehalterte Siebträgereinrichtung (50) in der Maschineneinheit (2) zwischen der Befüllposition (FS) und der Brühposition (BS) bewegbar ist.

7. Kaffeemaschine (1) nach einem der Ansprüche 1 bis 6, **dadurch gekennzeichnet, dass** die Siebträgereinrichtung (50) in der Maschineneinheit in einer Ebene, insbesondere in einer horizontalen Ebene zwischen der Befüllposition (FS) und der Brühposition (BS) bewegbar ist.

8. Kaffeemaschine (1) nach einem der Ansprüche 1 bis 7, **dadurch gekennzeichnet, dass** die Bewegung zwischen der Befüllposition (FS) und der Brühposition (BS) eine lineare Bewegung oder eine Schwenkbewegung ist.

9. Kaffeemaschine (1) nach einem der Ansprüche 1 bis 8, **dadurch gekennzeichnet, dass** die Brühposition (BS) und die Befüllposition (FS) entlang einer Einschubachse (EA) hintereinander angeordnet sind.

10. Kaffeemaschine (1) nach Anspruch 9, **dadurch gekennzeichnet, dass** die Befüllposition (FS) in Einschubrichtung (ER) nach der Brühposition (BS) angeordnet ist.

11. Kaffeemaschine (1) nach einem der Ansprüche 1 bis 10, **dadurch gekennzeichnet, dass** die Linearführungsvorrichtung (41) über eine senkrecht zur Einschubebene (EE) angeordneten Schwenkachse (S) schwenkbar an der Maschineneinheit (2) gelagert ist und die über die Linearführungsvorrichtung (41) in die Maschineneinheit (2) eingeschobene Siebträgereinrichtung (50) zusammen mit der Linearführungsvorrichtung (41) zwischen einer Befüllposition (FS) und der Brühposition (BS) schwenkbar gelagert ist.

12. Kaffeemaschine nach einem der Ansprüche 4 bis 11, **dadurch gekennzeichnet, dass** die Einrichtung zum Erzeugen und Abgeben von Kaffeepulver (30) ein Kegelmahlwerk (31) mit einem innen liegenden, feststehenden Mahlkegel (32) und einem aussen liegenden, angetriebenen Mahlring (33), welcher den Mahlkegel (32) umgibt, enthält, wobei das Kegelmahlwerk (31) so ausgelegt und in der Maschineneinheit (2) angeordnet ist, dass das gemahlene Kaffeepulver mittels Schwerkraft (G) führungslos aus dem Kegelmahlwerk (31) nach unten in den unterhalb angeordneten Kaffeeaufnahmeraum (51) der in der Befüllposition (FS) positionierten Siebträgereinrichtung (50) fällt.

13. **Verfahren** zum Brühen eines Kaffees mit einer Kaffeemaschine (1) nach einem der Ansprüche 1 bis 12,
**dadurch gekennzeichnet, dass**
die Siebträgereinrichtung (50) zum Brühen eines Kaffees über die Linearführung (42a, 42b, 55) mittels einer linearen Bewegung in die Maschineneinheit (2) eingeschoben und nach Abschluss des Brühvorganges in einer linearen Gegenbewegung wieder aus der Maschineneinheit (2) herausgezogen wird.

14. Verfahren nach Anspruch 13, **dadurch gekennzeichnet, dass** die Siebträgereinrichtung (50) zum Brühen eines Kaffees über die Linearführung (42a, 42b, 55) in einer linearen Bewegung zuerst in eine Befüllposition (FS) eingeschoben wird und nach dem Befüllen des Kaffeeaufnahmeraums (51) mit Kaffeepulver in einer linearen Gegenbewegung in eine Brühposition (BS) zurückgezogen wird.

15. Verfahren nach einem der Ansprüche 13 bis 14, **dadurch gekennzeichnet, dass** die Siebträgereinrichtung (50) zum Brühen eines Kaffees über die Linearführung (42a, 42b, 55) in einer linearen Bewegung in die Maschineneinheit (2) eingeschoben und zum Befüllen des Kaffeeaufnahmeraums (51) mit Kaffeepulver und zum Brühen des Kaffees zusammen mit der Halte- und Führungseinrichtung (40) zwischen einer Befüllposition (FS) und einer Brühposition (BS) verschwenkt wird.

## Claims

1. A coffee machine (1), comprising a machine unit (2) and a portafilter device (50) with a coffee receiving space (51) and a brewing filter (52), said portafilter device (50) being removable from the machine unit (2), wherein the machine unit (2) comprises a movably mounted brewing piston (4), a brewing water preparation device (60) for producing and delivering hot water under pressure into the coffee receiving space (51) of the portafilter device (50), and a holding and guiding device (40) for receiving and holding the portafilter device (50) on the machine unit (2), and the holding and guiding device (40) comprises a linear guide device (41) for the linear insertion of the portafilter device (50) into the machine unit (2), and the portafilter device (50) which is held in the linear guide device (41) is movable in the machine unit (2) into a brewing position (BS) for brewing a coffee,
**characterised in that**,
the machine unit (2) comprises a device (30) for delivering coffee powder into the coffee receiving space (51) of the portafilter device (50), and the portafilter device (50) which is held in the linear guide device (41) is movable in the machine unit (2) into a filling position (FS) for delivering coffee powder into the coffee receiving space (51) of the portafilter device (50) which is different from the brewing position (BS).

2. A coffee machine (1) according to claim 1, **characterised in that** the linear guide device (41) comprises two guide contours which run in parallel and are distanced to one another and the coffee receiving space (51) is arranged in a portafilter housing (54) of the portafilter device (50), and guide bodies (55) which interacting with the linear guide device (41) form a linear guide are arranged laterally on the portafilter housing (54).

3. A coffee machine (1) according to one of the claims 1 to 2, **characterised in that** the portafilter device (50) can be pushed into the brewing position (BS) in a linear movement via the linear guide device (41).

4. A coffee machine (1) according to one of the claims 1 to 3, **characterised in that** the device (30) for delivering coffee powder is a device for producing and delivering coffee powder into the coffee receiving space (51) of the portafilter device (50).

5. A coffee machine (1) according to one of the claims 1 to 4, **characterised in that** the portafilter device (50) can be pushed into the filling position (FS) in a linear movement via the linear guide device (41), in which filling position the coffee receiving space (51) of the portafilter device (50) can be filled with coffee powder.

6. A coffee machine (1) according to one of the claims 1 to 5, **characterised in that** the portafilter device (50) which is held in the linear guide device (41) is movable in the machine unit (2) between the filling position (FS) and the brewing position (BS).

7. A coffee machine (1) according to one of the claims 1 to 6, **characterised in that** the portafilter device (50) is movable in the machine unit in a plane, in particular in a horizontal plane, between the filling position (FS) and the brewing position (BS).

8. A coffee machine (1) according to one of the claims 1 to 7, **characterised in that** the movement between the filling position (FS) and the brewing position (BS) is a linear movement or a pivoting movement.

9. A coffee machine (1) according to one of the claims 1 to 8, **characterised in that** the brewing position (BS) and the filling position (FS) are arranged behind one another along an insertion axis (EA).

10. A coffee machine (1) according to claim 9, **characterised in that** the filling position (FS) is arranged after the brewing position (BS) in the insertion direction (ER).

11. A coffee machine (1) according to one of the claims 1 to 10, **characterised in that** the linear guide device (41) is pivotably mounted on the machine unit (2) via a pivot axis (S) which is arranged perpendicularly to the insertion plane (EE) and the portafilter device (50) which is pushed into the machine unit (2) via the linear guide device (41) is pivotably mounted together with the linear guide device (41) between a filling position (FS) and the brewing position (BS).

12. A coffee machine according to one of the claims 4 to 11, **characterised in that** the device for producing and delivering coffee powder (50) comprises a cone grinder (31) with an inner-lying, stationary grinding cone (32) and with an outer-lying, driven grinding ring (33) which surrounds the grinding cone (32), wherein the cone grinder (31) is designed and arranged in the machine unit (2) such that the ground coffee powder falls downwards out of the cone grinder (31) without guidance by way of gravitational force (G) into the coffee receiving space (51) arranged below, of the portafilter device (50) which is positioned in the filling position (FS).

13. A method for brewing a coffee with a coffee machine (1) according to one of the claims 1 to 12, **characterised in that**
for brewing a coffee, the portafilter device (50) is pushed into the machine unit (2) by way of a linear movement via the linear guide (42a, 42b, 55) and after completion of the brewing procedure is pulled out of the machine unit (2) again in a linear counter-movement.

14. A method according to claim 13, **characterised in that** for brewing a coffee, the portafilter device (50) is firstly pushed into a filling position (FS) in a linear movement via the linear guide (42a, 42b, 55) and after the filling of the coffee receiving space (51) with coffee powder is retracted into a brewing position (BS) in a linear counter-movement.

15. A method according to one of the claims 13 to 14, **characterised in that** for brewing coffee, the portafilter device (50) is pushed into the machine unit (2) in a linear movement via the linear guide (42a, 42b, 55) and for filling the coffee receiving space (51) with coffee powder and for brewing the coffee is pivoted together with the holding and guiding device (40) between a filling position (FS) and a brewing position (BS).

## Revendications

1. Machine à café (1) comprenant une unité machine (2) et un porte-filtre (50) amovible de l'unité machine (2) avec und espace de réception du café (51) et un filtre à café (52), l'unité machine (2) comprenant un piston de percolation (4) monté de manière mobile, un dispositif de préparation d'eau d'infusion (60) pour produire et délivrer de l'eau chaude sous pression dans l'espace de réception du café (51) du dispositif porte-filtre (50), et un dispositif de maintien et de guidage (40) pour recevoir et maintenir le dispositif porte-filtre (50) sur l'unité machine (2), et le dispositif de maintien et de guidage (40) comprend un dispositif de guidage linéaire (41) pour l'insertion linéaire du dispositif porte-filtre (50) dans l'unité machine (2), et le dispositif de porte-filtre (50) maintenu dans le dispositif de guidage linéaire (41) peut être déplacé dans l'unité machine (2) dans une position d'infusion (BS) pour infuser un café,
**caractérisé en ce que**
l'unité machine (2) comprend un dispositif (30) pour distribuer la poudre de café dans l'espace de réception du café (51) du dispositif porte-filtre (50), et le dispositif porte-filtre (50) maintenu dans le dispositif de guidage linéaire (41) dans l'unité machine (2) peut être déplacé dans une position de remplissage (FS) différente de la position d'infusion (BS) afin de distribuer la poudre de café dans l'espace de réception du café (51) du dispositif porte-filtre (50).

2. Machine à café (1) selon la revendication 1, **caractérisée en ce que** le dispositif de guidage linéaire (41) comprend deux contours de guidage parallèles espacés l'un de l'autre et l'espace de réception du café (51) est disposé dans un boîtier de porte-filtre (54) du dispositif porte-filtre (50) et des corps de guidage (55) sont disposés latéralement sur le boîtier de porte-filtre (54), qui, en coopération avec le dispositif de guidage linéaire (41), forment un guidage linéaire.

3. Machine à café (1) selon l'une des revendications 1 à 2, **caractérisée en ce que** le dispositif porte-filtre (50) peut être poussé dans la position d'infusion (BS) dans un mouvement linéaire via le dispositif de guidage linéaire (41).

4. Machine à café (1) selon l'une des revendications 1 à 3, **caractérisée en ce que** le dispositif (30) pour distribuer la poudre de café est un dispositif (30) pour produire et distribuer la poudre de café dans l'espace de réception du café (51) du dispositif porte-filtre (50).

5. Machine à café (1) selon l'une des revendications 1 à 4, **caractérisée en ce que** le dispositif porte-filtre (50) peut être déplacé par le dispositif de guidage linéaire (41) dans un mouvement linéaire jusqu'à la position de remplissage (FS), dans laquelle l'espace de réception du café (51) du dispositif porte-filtre (50) peut être rempli de café moulu.

6. Machine à café (1) selon l'une des revendications 1 à 5, **caractérisée en ce que** le dispositif porte-filtre (50) maintenu dans le dispositif de guidage linéaire (41) peut être déplacé dans l'unité machine (2) entre la position de remplissage (FS) et la position d'infusion (BS).

7. Machine à café (1) selon l'une des revendications 1 à 6, **caractérisée en ce que** le dispositif porte-filtre (50) peut être déplacé dans l'unité machine dans un plan, en particulier dans un plan horizontal, entre la position de remplissage (FS) et la position d'infusion (BS).

8. Machine à café (1) selon l'une des revendications 1 à 7, **caractérisée en ce que** le mouvement entre la position de remplissage (FS) et la position d'infusion (BS) est un mouvement linéaire ou un mouvement pivotant.

9. Machine à café (1) selon l'une des revendications 1 à 8, **caractérisée en ce que** la position d'infusion (BS) et la position de remplissage (FS) sont disposées l'une derrière l'autre le long d'un axe d'insertion (EA).

10. Machine à café (1) selon la revendication 9, **caractérisée en ce que** la position de remplissage (FS) est disposée dans le sens d'insertion (ER) après la position d'infusion (BS).

11. Machine à café (1) selon l'une des revendications 1 à 10, **caractérisée en ce que** le dispositif de guidage linéaire (41) est monté de manière pivotante sur l'unité machine (2) via un axe de pivotement (S) disposé perpendiculairement au plan d'insertion (EE) et que le dispositif porte-filtre (50) inséré dans l'unité machine (2) via le dispositif de guidage linéaire (41) est monté de manière pivotante avec le dispositif de guidage linéaire (41) entre une position de remplissage (FS) et la position d'infusion (BS).

12. Machine à café selon l'une des revendications 4 à 11, **caractérisée en ce que** le dispositif (30) pour produire et distribuer de la poudre de café comprend un broyeur conique (31) avec un cône de broyage fixe interne (32) et une bague de broyage externe entraînée (33) qui entoure le cône de broyage (32), le broyeur conique (31) est conçu et disposé dans l'unité machine (2) de telle sorte que la poudre de café moulue tombe par gravité (G) sans guidage depuis le broyeur conique (31) vers le bas dans l'espace de réception du café (51) situé en dessous du dispositif porte-filtre (50) positionné en position de remplissage (FS).

13. **Procédé** pour préparer un café à l'aide d'une machine à café (1) selon l'une des revendications 1 à 12,
**caractérisé en ce que**
le dispositif porte-filtre (50) destiné à infuser un café est inséré dans l'unité machine (2) via le guidage linéaire (42a, 42b, 55) au moyen d'un mouvement linéaire et, une fois le processus d'infusion terminé, est retiré de l'unité machine (2) dans un mouvement linéaire inverse.

14. Procédé selon la revendication 13, **caractérisé en ce que** le dispositif porte-filtre (50) destiné à infuser un café est d'abord inséré dans une position de remplissage (FS) via le guidage linéaire (42a, 42b, 55) dans un mouvement linéaire, puis, après le remplissage de l'espace de réception du café (51) avec de la poudre de café, est retiré dans un mouvement linéaire inverse dans une position d'infusion (BS).

15. Procédé selon l'une des revendications 13 à 14, **caractérisé en ce que** le dispositif porte-filtre (50) destiné à infuser un café est poussé dans l'unité machine (2) dans un mouvement linéaire via le guidage linéaire (42a, 42b, 55) dans l'unité machine (2) et, pour remplir l'espace de réception du café (51) avec de la poudre de café et pour infuser le café, est pivoté avec le dispositif de maintien et de guidage (40) entre une position de remplissage (FS) et une position d'infusion (BS).
